# FASCICULE DE BREVET EUROPEEN

(11) **EP 3 352 327 B1**
(45) Date de publication et mention de la délivrance du brevet: **25.06.2025**
(21) Numéro de dépôt: 18152892.8
(22) Date de dépôt: 23.01.2018
(51) Int. Cl.: H02J 13/00, B60L 3/00

(54) **PROCÉDÉ ET SYSTÈME POUR GÉRER UN RÉSEAU ÉLECTRIQUE D'UN RÉSEAU FERROVIAIRE**
VERFAHREN UND SYSTEM ZUR VERWALTUNG DES ELEKTRISCHEN NETZES EINES EISENBAHNNETZES
METHOD AND SYSTEM FOR MANAGING THE ELECTRIC NETWORK OF A RAILWAY NETWORK

(30) Priorité: 24.01.2017 FR 1750570
(43) Date de publication de la demande: 25.07.2018
(73) Titulaire: ALSTOM Holdings, 93400 Saint-Ouen-sur-Seine (FR)
(72) Inventeur: MANUGUERRA, Alain, 78180 MONTIGNY LE BRETONNEUX (FR); DESHAYES, Laurent, 95580 MARGENCY (FR)
(74) Mandataire: Plasseraud IP

(56) Documents cités:
- EP-A1- 2 693 598
- EP-A1- 3 091 631
- ES-A1- 2 392 079
- FR-A1- 3 003 209
- JP-B1- 6 029 799
- US-A1- 2007 135 971
- US-A1- 2014 142 760
- US-A1- 2014 288 863
- US-A1- 2015 094 965

## Description

La présente invention concerne un procédé pour gérer un réseau électrique d'un réseau ferroviaire, comprenant une étape consistant à recevoir une pluralité de données mesurées, les données mesurées comprenant l'intensité de courant et/ou une valeur de tension fourni(e) à et/ou reçu(e) d'un moyen d'alimentation de courant d'une ligne ferroviaire d'au moins une sous-station d'alimentation électrique.

US 2015/0094965 A1 concerne un système comprenant une pluralité de sources électriques, un réseau de transmission, une pluralité de réseaux de distribution et des charges connectées aux réseaux de distribution.

US 2014/014760 A1 concerne des systèmes et procédés pour détecter statistiquement des erreurs dans des systèmes de gestion de bâtiments.

FR 3 003 209 A1 concerne un véhicule ferroviaire comprenant un dispositif de diagnostic propre à communiquer, à l'infrastructure ferroviaire, des données représentatives de l'état de fonctionnement d'équipements électriques.

US 2014/288863 A1 concerne un procédé et un dispositif pour surveiller une ligne de transmission haute tension, en particulier pour calculer l'intensité admissible de courant en fonction des paramètres météorologique.

JP 6029799 81 concerne un système comprenant un appareil de calcul de tension d'un courant continu pour l'alimentation. L'appareil de calcul de tension comprend une unité de mémoire 1, une unité d'information de l'opération de train et une unité de calcul de la valeur de tension d'une sous-station. L'appareil est connecté à la sous-station par une connexion sans fil. Le train peut avoir un mode de récupération d'énergie de freinage.

EP 2 693 598 A1 concerne un système et un procédé pour contrôler la charge des batteries d'un véhicule ferroviaire. Un module de control permet de mesurer le courant dans le caténaire.

Par exemple, KR 101437350 et CN 104578399 divulguent respectivement un système de captage intelligent pour capter le courant et la tension dans un réseau ferroviaire.

Lors du fonctionnement d'un réseau électrique d'une voie ferroviaire, l'équipement électrique peut se dégrader lentement ou des événements non-connus peuvent détruire ou endommager l'équipement électrique.

Le but de la demande est de proposer un procédé et un système permettant une gestion plus efficace d'un réseau électrique d'un réseau ferroviaire.

Ce but est atteint, conformément à l'invention, par un procédé pour gérer un réseau électrique d'un réseau ferroviaire selon la revendication 1.

Selon des caractéristiques avantageuses :
- les données mesurées comprennent une ou plusieurs valeurs de température associées à au moins un équipement électrique et/ou à une ou des salles de la sous-station d'alimentation électrique et/ou des compteurs de manœuvres d'un interrupteur de connexion électrique associé au moins un équipement électrique de la sous-station d'alimentation électrique ; et/ou
- le procédé comprend en outre l'étape suivante : la mesure, au niveau de la sous-station d'alimentation électrique, des données mesurées et/ou d'une ou plusieurs valeurs de température associées à au moins un équipement électrique ou à une ou des salles de la sous-station d'alimentation électrique.

Selon un autre aspect de l'invention, ce but est atteint, par un système selon la revendication 4.

Selon des caractéristiques avantageuses :
- les données mesurées comprennent une ou plusieurs valeurs de température associées à au moins un équipement électrique et/ou à une ou des salles de la sous-station d'alimentation électrique et/ou des compteurs de manœuvres d'un interrupteur de connexion électrique associé au moins un équipement électrique de la sous-station d'alimentation électrique ;
- la sous-station d'alimentation électrique, est propre à mesurer des données mesurées, et/ou une ou plusieurs valeurs de température associées à au moins un équipement électrique ou à une salle de la sous-station d'alimentation électrique ; et/ou
- le système comprend un réseau informatique pour une communication des sous-stations entre elles.

D'autres caractéristiques et avantages de la présente invention ressortiront de la description faite ci-dessous, en référence aux dessins, qui illustrent un exemple de réalisation dépourvu de tout caractère limitatif et dans lesquels :
- la figure 1 est une vue schématique d'un tronçon d'une voie ferroviaire ;
- la figure 2 est une vue schématique d'un système selon l'invention ;
- la figure 3 est une vue schématique d'une portion du système selon l'invention et
- la figure 4 montre un organigramme du procédé selon l'invention.

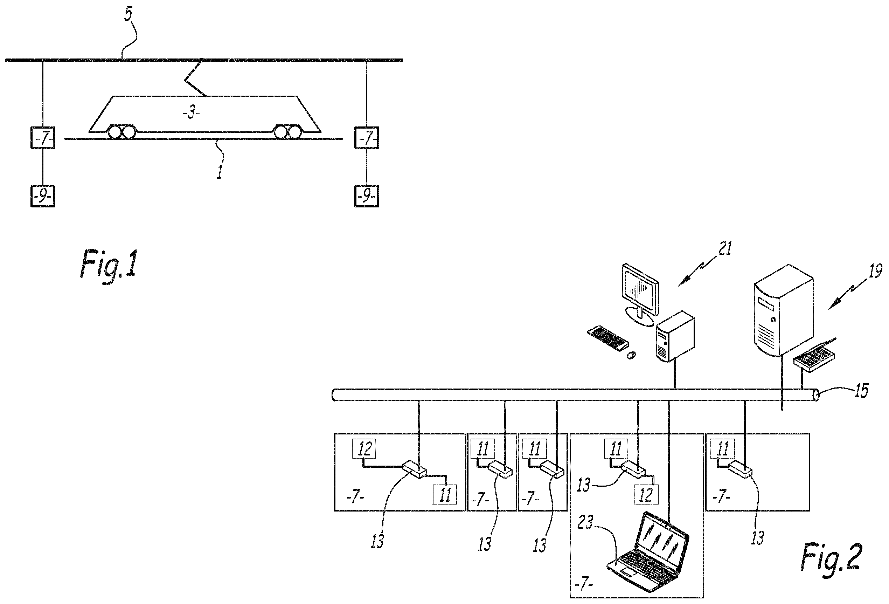

La figure 1 montre schématiquement un tronçon d'une voie ferroviaire 1 sur laquelle un véhicule ferroviaire 3 électrique circule. Le véhicule ferroviaire 3 est par exemple un tramway, un train, un métro, etc. Le véhicule ferroviaire 3 peut fonctionner dans un mode de traction, où le véhicule ferroviaire 3 consomme une énergie électrique fournie par un moyen d'alimentation de courant 5, ou dans un mode de récupération d'énergie de freinage, dans lequel le véhicule ferroviaire 3 génère une énergie électrique qu'il transmet au moyen d'alimentation de courant 5.

Le moyen d'alimentation de courant 5 pour le véhicule longe la voie ferroviaire 1. Par exemple, le moyen d'alimentation de courant 5 est une caténaire ou un rail conducteur.

Le système de gestion d'énergie électrique d'un réseau ferroviaire comprend une pluralité de sous-stations d'alimentation électrique 7. Les sous-stations d'alimentation électrique 7 sont connectées d'un côté au moyen d'alimentation de courant 5 et d'un autre côté à un réseau de distribution de haute tension 9.

Les sous-stations d'alimentation électrique 7 sont propres à convertir un premier courant électrique ayant une tension de transport, par exemple reçu du réseau de distribution de haute tension 9, en un deuxième courant ayant une tension d'utilisation et étant propre à circuler sur le moyen d'alimentation de courant 5, ou l'inverse lorsque le véhicule ferroviaire 3 fonctionne dans le mode de récupération d'énergie de freinage.

A cet effet, les sous-stations d'alimentation électrique 7 comprennent des équipements électriques, par exemple un ou plusieurs transformateurs, un ou plusieurs onduleurs, un ou plusieurs redresseurs, un ou plusieurs disjoncteurs, un ou plusieurs contacteurs, et/ou un ou plusieurs sectionneurs.

La figure 2 est une vue schématique du système. Les sous-stations d'alimentation électrique 7 comprennent chacune un ou plusieurs capteurs 11 de courant et/ou de tension propre à mesurer le courant et/ou la tension fourni(e) au et/ou reçu(e) du moyen d'alimentation de courant 5. Dans un mode de réalisation, le courant fourni au moyen d'alimentation de courant 5 est le courant utilisé par le véhicule ferroviaire 3 lors d'une traction et le courant reçu du véhicule ferroviaire 3, lorsque le véhicule ferroviaire 3 est en un mode de récupération des énergies de freinage.

Le courant d'alimentation est par exemple un courant continu ou un courant alternatif.

Avantageusement, les sous-stations d'alimentation électrique 7 comprennent également des capteurs de comptage propres à compter un nombre de manœuvres, c'est-à-dire à déterminer un compteur de manœuvres d'un interrupteur de connexion électrique associé à au moins un équipement électrique de la sous-station d'alimentation électrique 7. Le nombre de manœuvres est par exemple un nombre d'ouvertures et/ou de fermetures de l'interrupteur.

En outre, les sous-stations d'alimentation électrique 7 comprennent, dans un mode de réalisation, un ou plusieurs capteurs de température 12. Le ou les capteurs de température sont propre à capter la température de l'équipement électrique de la sous-station d'alimentation électrique 7 respective, et/ou la température de la ou des salles de la sous-station d'alimentation électrique 7 respective.

Le ou les capteurs sont connectés à une ou plusieurs unités locales de calcul 13, par exemple un circuit programmé et/ou un processeur. Chaque unité locale de calcul 13 est propre à être connectée à un réseau informatique 15. Dans un mode de réalisation, le réseau informatique 15 est un réseau virtuel.

Le réseau informatique 15 permet une communication entre chaque sous-station d'alimentation électrique 7 et une ou plusieurs unités centrales 19. Une unité centrale 19 est associée à plusieurs sous-stations d'alimentation électrique 7. La ou les unités centrales 19 sont agencées à distance des sous-stations d'alimentation électrique 7.

La ou les unités locales de calcul 13 transmettent à la ou aux unités centrales 19 les données mesurées. Les données mesurées comprennent une intensité du courant et/ou une valeur de tension fourni(e) au et/ou reçu(e) du moyen d'alimentation de courant 5. En outre, dans un mode de réalisation, les unités locales de calcul 13 transmettent une ou plusieurs valeurs de température à la ou aux unités centrales 19 en tant que données mesurées et/ou les compteurs de manœuvres. Les données mesurées transmises sont associées à une valeur de temps ou horodatées. Dans d'autres exemples, toutes les données électriques en provenance des unités locales de calcul 13 des sous-stations d'alimentation électrique 7 sont envoyées à l'unité centrale 19. Dans un autre exemple, la ou les unités locales de calcul 13 sont propres à envoyer l'état de fonctionnement d'un ou des équipements électriques, un événement, une alarme etc. Dans un mode de réalisation, un évènement est un changement d'état de fonctionnement d'un équipement, par exemple un disjoncteur change de la position ouverte à la position fermée et/ou la température d'un transformateur s'élève d'une valeur normale à anormale (trop chaud)]

Le réseau informatique 15 permet également une communication entre les sous-stations d'alimentation électrique 7, en particulier entre les unités locales de calcul 13 des sous-stations d'alimentation électrique 7. Par exemple, une première unité locale de calcul 13 d'une premier sous-station d'alimentation électrique 7 a besoin d'une ou plusieurs données d'une deuxième unité local de calcul 13 dans une deuxième sous-station d'alimentation électrique 7, en particulier sans consulter une unité centrale 19.

Dans un mode de réalisation, les unités locales de calcul 13 sont propres à contrôler l'équipement électrique situé dans la sous-station d'alimentation électrique respective. Par exemple, la ou les unités locales de calcul 13 sont propres à commander, activer et/ou arrêter un ou plusieurs équipements électriques de la sous-station d'alimentation électrique 7. Selon l'invention, les unités locales de calcul 13 contrôles le ou les équipements électriques en réponse d'un signal de commande reçue de l'une des unités centrales 19.

Les unités locales de calcul 13 ne comportent aucune interface homme machine locale sophistiquée pour analyser ou afficher les valeurs des capteurs 11, 12. Une interface homme machine est, par exemple, fournie par un ordinateur ou un appareil portable 23 qui est connecté au réseau informatique 15 pour recevoir ces informations de l'unité centrale 19.

L'unité centrale 19 est, par exemple, un serveur qui est propre à préparer des informations lisibles par des clients sur d'autres ordinateurs, par exemple un ordinateur 21 situé sur le site de l'unité centrale ou par l'appareil portable 23. Dans un mode de réalisation, le serveur est propre à générer des pages HTML (hypertext markup language) qui sont lisibles par un navigateur web installé sur l'ordinateur 21 et/ou l'appareil portable 23.

Dans un mode de réalisation, l'unité centrale 19 est propre à enrichir les données brutes par des algorithmes, des seuils, des compteurs etc. Les données enrichies sont mises à disposition par l'unité centrale 19 aux différents intervenants, par exemple à l'appareil portable 23 et/ou à l'ordinateur 21, en tant qu'informations. Les informations lisibles mis à disposition aux autres ordinateurs 21 ou appareils portables 23 sont les valeurs actuelles ou historiques des capteurs 11, 12 ou des informations basées sur les valeurs actuelles ou historiques des capteurs 11, 12.

En outre, l'unité centrale 19 est propre à envoyer des signaux de commande aux unités locales de calcul 13 pour les contrôler ou pour contrôler le ou les équipements électriques de la sous-station d'alimentation électrique respective 7, par exemple en réponse d'une commande d'un utilisateur ou d'un calcul à partir des données reçues.

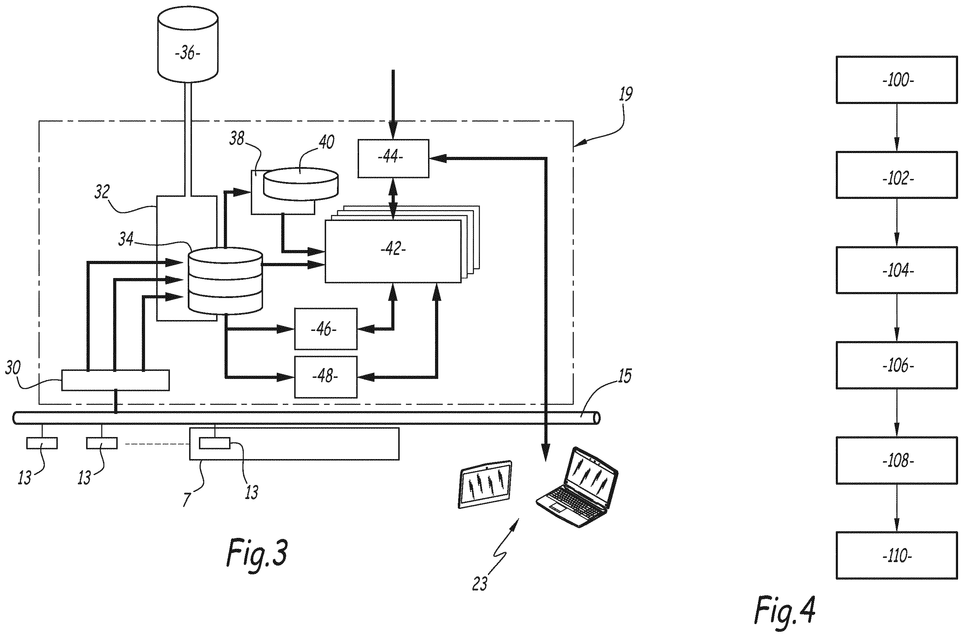

La figure 3 est une vue schématique d'une portion du système selon l'invention montrant plus en détail l'unité centrale 19. L'unité centrale 19 comprend un premier module de communication 30 propre à être connecté aux unités locales de calcul 13 via le réseau informatique 15. Les unités locales de calcul 13 sont propres à envoyer de leur propre initiative les données à l'unité centrale 19. Par exemple, les unités locales de calcul 13 peuvent envoyer les données mesurées lorsqu'une valeur change, périodiquement, et/ou sur demande d'un utilisateur.

Le module de communication 30 transmet les données mesurées par les capteurs 11, 12 des sous-stations d'alimentation électrique 7 à un module de gestion de base de données 32. Le module de gestion de base de données 32 est propre à stocker les données mesurées dans une base de données 34, à faire une synchronisation avec une autre base de données externe 36 et à faire une copie de secours de la base de données 34. En particulier toutes les valeurs numériques, les événements et les alarmes des sous-stations d'alimentation électriques sont stockés dans la base de données 34. Dans un mode de réalisation, le site ou la localisation de la sous-station d'alimentation électrique 7 est également associé aux données.

Le module de création d'un graphique 42 crée, grâce aux données de la base de données 34, un graphique représentant les données. Le graphique est fourni à un module serveur 44 qui donnent accès aux ordinateurs distants 21, 23.

Dans un mode de réalisation, l'unité centrale 19 comprend un module de gestion d'alarmes 46 et un module mathématique 48. Le module 46 de gestion d'alarme permet suivant l'état des alarmes et les différentes actions effectuées de l'opérateur, d'établir pour chaque alarme différentes valeurs, par exemple : alarme présente non acquittée, alarme acquittée, alarme disparue non acquittée, et/ou alarme masquée. Le module mathématique 48 élabore des calculs sur les données de la base de données 34 pour créer de nouvelles données ou pour avoir une représentation de celles-ci dans le graphique comme, par exemple, un calcul d'une moyenne horaire, un cumul sur une journée, une statistique sur une année, etc ...

Le module serveur 44 est propre à recevoir des commandes d'un ordinateur distant 21, 23, par exemple pour permettre de filtrer les données par catégorie, par exemple : date, degré de sévérité et/ou importance ; type d'équipement ; niveau de tension et/ou lieu de mesure.

Par exemple, dans un mode de réalisation, l'opérateur peut, en utilisant un ordinateur distant, visualiser des schémas généraux d'alimentation électrique, des schémas détaillés des sous-station électriques (poste de connexion au réseau électrique ; sous-station de traction ; sous station auxiliaire etc.), et/ou des schémas de l'architecture informatique en tant que information.

Dans un mode de réalisation, l'unité centrale 19 est propre à générer des informations, par exemple sous forme des tableaux de bord, concernant l'état général des équipements électriques de la voie ferroviaire 1, l'état détaillé des équipements électriques de chaque sous station 7, l'état général des équipements constituant de l'architecture informatique du système, par exemple l'unité locale de calcul 13, l'état détaillé des automates de chaque sous station électrique, temps d'opération des équipements électriques, et/ou des températures d'utilisation des équipements électriques. L'état d'un équipement électrique inclut si cet équipement est en marche ou en arrêt.

L'architecture informatique du système comprend le ou les unités locales de calcul 13, le réseau informatique 15, l'unité centrale 19 et le ou les unités de visualisation, par exemple un ou plusieurs ordinateurs 21 et 23.

Dans un mode de réalisation, l'unité centrale 19 comprend une fonction 38 pour rejouer des données captées en utilisant une base de données pour rejouer 40. A cet effet, la fonction pour rejouer 38 est propre à lire les données de la base de données 34 pour les stocker dans sa base de données pour rejouer 40. La fonction 38 est propre à générer une séquence des données et à les fournir à un module de création d'un graphique 42.

L'unité centrale 19 permet de rejouer des données, par exemple pas à pas, pour relancer une séquence défectueuse. Donc une analyse plus fine des pannes est possible.

Ces informations permettent une maintenance effective du système d'énergie et, en particulier, d'une ou plusieurs sous-station d'alimentation électrique 7. Par exemple, l'unité centrale 19, en particulier le module mathématique 48, est propre à émettre des alertes à destination du personnel de maintenance afin de programmer des opérations de maintenance de l'équipement électrique, en particulier en accord avec les instructions du fabricant de l'équipement électrique.

Dans un mode de réalisation, l'utilisateur peut envoyer des signaux de commande vers les sous-stations d'alimentation électrique 7 pour contrôler l'équipement électrique, par l'unité centrale 19. Dans un autre exemple, l'unité centrale 19 peut envoyer des signaux de commande vers les sous-stations d'alimentation électrique 7 en fonction d'une ou plusieurs valeurs captées reçues.

Dans un autre mode de réalisation, l'unité centrale 19 est propre à générer des informations, par exemple sous forme des tableaux de bord, concernant par exemple, des mesures électriques actuelles de courant ou de tension et des valeurs minimales, maximales, moyennes, et/ou efficaces ; une consommation d'énergie et une identification des écarts par rapport à un modèle statistique ou à une moyenne historisée ; la puissance requise par la sous-station d'alimentation électrique 7, par exemple en kVA, kW, kVAR, et/ou le facteur de puissance ; la puissance soutirée par la sous-station d'alimentation électrique 7, par exemple la puissance pour la traction et/ou la puissance, en particulier en kVA, kW, kVAR, et/ou le facteur de puissance, pour les auxiliaires ; la puissance récupérée vers la haute tension et/ou la puissance récupérée vers le courant continu pour les sous-stations d'alimentation électrique 7 réversibles ; et/ou un rendement de la sous-station d'alimentation électrique 7 (avec et sans inclusion des sous-stations d'alimentation électrique auxiliaires). Par exemple, ces informations permettent une prédiction de la consommation et des profils type, la mise en évidence d'anomalies et l'optimisation de l'abonnement d'énergie. Dans un autre exemple, l'unité centrale 19 est propre à calculer des profils de charge estimative, par exemple journalier, mensuel ou annuel, pour les comparer avec une consommation actuelle pour analyser ou anticiper les écarts.

Une sous-station d'alimentation électrique 7 réversible fonctionne dans les deux sens soit en fournissant l'énergie de traction au véhicule ferroviaire 3, ou en récupérant l'énergie de freinage du véhicule ferroviaire 3 pour la restituer en amont, comme expliqué ci-dessus. Une sous-station d'alimentation électrique 7 auxiliaire est une sous-station qui ne fournit pas l'énergie de traction au véhicule ferroviaire 3, mais qui fournit l'énergie aux stations voyageurs pour l'éclairage, la ventilation, la climatisation ou le chauffage, etc.. Ces informations permettent une gestion effective de l'énergie.

Dans un autre mode de réalisation, l'unité centrale 19 est propre à exécuter différentes séquences pour mettre sous tension l'énergie haute tension, à arrêter l'énergie haute tension, à mettre sous tension ou arrêter l'énergie de traction ; à mettre sous tension ou hors tension une section électrique à partir de différentes commandes de l'opérateur depuis un ordinateur distant 21, 23.

A cet effet, l'unité centrale 19, en réponse d'une commande d'un utilisateur ou automatiquement, envoie un ou plusieurs signaux de commande vers une unité locale de calcul 13. En réponse à la réception de ce ou ces signaux de commande, l'unité locale de calcul 13 exécute la ou les commandes, par exemple active le disjoncteur pour mettre sous tension la sous-station d'alimentation électrique 7. Selon l'invention, si l'unité centrale 19 détecte lors d'une comparaison d'une valeur instantanée de courant et/ou de tension qu'une erreur se produit, elle peut exécuter une séquence pour mettre en mode dégradé le moyen d'alimentation de courant 5

Ces opérations permettent de gérer l'infrastructure électrique d'une voie ferrée et peuvent être demandées par un ordinateur distant 21, 23 via le module serveur 44. La figure 4 montre un organigramme du procédé selon l'invention.

Dans une étape 100, les unités locales de calcul 13 reçoivent les données mesurées des capteurs 11, 12 et envoient ces données mesurées à l'unité centrale 19. L'unité centrale 19 reçoit les données mesurées. Les données mesurées comprennent l'intensité d'un courant, une valeur de tension fourni(e) au et/ou reçu(e) du moyen d'alimentation en courant 5, et/ou une ou plusieurs valeurs de température associées à au moins un équipement électrique et/ou à une ou des salles de la sous-station d'alimentation électrique 7.

Avantageusement, les données mesurées comprennent des compteurs de manœuvres d'un interrupteur de connexion électrique associé à au moins un équipement électrique de la sous-station d'alimentation électrique.

Dans un mode de réalisation, les données mesurées sont associée avec un temps de captage par l'unité locale de calcul 13 et/ou par le capteur 11, 12 qui est également envoyé par l'unité locale de calcul respective 13 à l'unité centrale 19.

Dans une étape 102, l'unité centrale 19 stocke les données mesurées dans la base de données 34, les données mesurées stockées étant associées à un temps de captage.

L'unité centrale 19 reçoit ensuite, dans l'étape 104, une ou plusieurs valeurs mesurées instantanées de l'intensité du courant et/ou de la tension fourni(e) au et/ou reçu(e) du moyen d'alimentation en courant 5. Dans un mode de réalisation, l'unité centrale 19 reçoit, d'une ou plusieurs unités locales de calcul 13, d'autres valeurs mesurées instantanées, par exemple des valeurs de température associées à au moins un équipement électrique et/ou à une ou des salles de la sous-station d'alimentation électrique 7 respective.

Dans l'étape 106, l'unité centrale 19 calcule, par exemple avec le module mathématique 48, au moins une valeur estimée du ou des valeurs mesurées instantanées, à partir des données mesurées stockées. Par exemple, la valeur estimée correspond à une intensité de courant estimée ou une valeur de tension estimée pour l'instant de captage de la ou des valeurs mesurées instantanée de l'intensité du courant et/ou de la tension fourni(e) au et/ou reçu(e) du moyen d'alimentation en courant 5.

Ensuite, dans l'étape 108, la ou les valeurs mesurées instantanées sont comparées avec la ou les valeurs estimées, par exemple par l'unité centrale 19.

L'unité centrale 19 actionne, dans l'étape 110 une alarme, en fonction de la comparaison de la ou des valeurs mesurées instantanées avec la ou les valeurs estimées. Par exemple, si la ou les valeurs mesurées instantanées ont une différence supérieure à une valeur prédéterminée, l'unité centrale 19 actionne l'alarme. Dans un mode de réalisation, l'alarme indique une maintenance à effectuer. Selon l'invention, l'unité centrale 19 envoie un signal de commande vers la sous-station d'alimentation électrique 7, en fonction de la comparaison de la ou des valeurs mesurées instantanées avec la ou les valeurs estimées. A la réception du signal de commande, la sous-station d'alimentation électrique 7 contrôle au moins un équipement électrique de la sous-station d'alimentation électrique 7 en fonction du signal de commande. Par exemple, la signal de commande peut commander la sous-station d'alimentation électrique 7 à mettre sous tension ou arrêter l'énergie de traction, à mettre sous tension ou hors tension une section électrique, et/ou à effectuer d'autres opérations.

## Revendications

1. Procédé pour gérer un réseau électrique d'un réseau ferroviaire, le réseau électrique comprenant au moins une unité centrale (19) et une pluralité de sous-stations d'alimentation électrique (7), les sous-stations d'alimentation électrique étant connectées à un moyen d'alimentation en courant (5) d'un ou plusieurs véhicules ferroviaires (3), les sous-stations d'alimentation électrique (7) étant propres à convertir un deuxième courant électrique propre à circuler sur le moyen d'alimentation de courant (5) et ayant une tension d'utilisation en un premier courant électrique ayant une tension de transport lorsque le ou les véhicules ferroviaires (3) fonctionnent dans le mode de récupération d'énergie de freinage, les sous-stations d'alimentation électrique (7) comprennent chacune un ou plusieurs capteurs (11, 12), le ou les capteurs étant connectés à une ou plusieurs unités locales de calcul (13), les unités locales de calcul (13) ne comportent aucune interface homme machine locale pour analyser ou afficher les valeurs des capteurs et les unités locales de calcul (13) étant propre à être connectée à un réseau informatique (15), l'unité centrale (19) comprenant un module de communication (30) propre à être connecté aux unités locales de calcul (13) via le réseau informatique (15), le procédé comprenant des étapes consistant en :
la réception (100), par l'unité centrale (19) du ou des unités locales de calcul (13) des sous stations d'alimentation électrique (7), d'une pluralité de données mesurées, les données mesurées comprenant l'intensité d'un courant et/ou une valeur de tension fourni(e) au et/ou reçu(e) du moyen d'alimentation en courant (5);
le stockage (102), par l'unité centrale (19), des données mesurées, les données mesurées stockées étant associées à un temps de captage ;
la réception (104), par l'unité centrale (19), d'une ou plusieurs valeurs mesurées instantanées de l'intensité du courant et/ou de la tension fourni(e) au et/ou reçu(e) du moyen d'alimentation en courant (5);
**caractérisé en ce que** le procédé comprend en outre les étapes consistant en :
le calcul (106), par l'unité centrale (19), d'au moins une valeur estimée du ou des valeurs mesurées instantanées, à partir des données mesurées stockées ;
la comparaison (108), au niveau de l'unité centrale (19), de la ou des valeurs mesurées instantanées avec la ou les valeurs estimées ;
l'envoi (110), par l'unité centrale (19), d'un signal de commande vers la sous-station d'alimentation électrique (7), en fonction de la comparaison de la ou des valeurs instantanées avec la ou les valeurs estimées ; et
à la réception du signal de commande, la sous-station d'alimentation électrique (7) contrôle au moins un équipement électrique de la sous-station d'alimentation électrique (7) en fonction du signal de commande, et **en ce que** si l'unité centrale (19) détecte lors d'une comparaison d'une valeur instantanée de courant et/ou de tension qu'une erreur se produit, elle exécute une séquence pour mettre en mode dégradé le moyen d'alimentation de courant (5).

2. Procédé selon l'une des revendications précédentes, **caractérisé en ce que** les données mesurées comprennent une ou plusieurs valeurs de température associées à au moins un équipement électrique et/ou à une ou des salles de la sous-station d'alimentation électrique (7), et/ou des compteurs de manœuvres d'un interrupteur de connexion électrique associé au moins un équipement électrique de la sous-station d'alimentation électrique.

3. Procédé selon l'une des revendications précédentes, **caractérisé en ce que** le procédé comprend en outre l'étape suivante : la mesure, au niveau de la sous-station d'alimentation électrique (7), des données mesurées et/ou d'une ou plusieurs valeurs de température associées à au moins un équipement électrique ou à une ou des salles de la sous-station d'alimentation électrique (7).

4. Système pour gérer un réseau électrique d'un réseau ferroviaire, le réseau électrique comprenant au moins une unité centrale (19) et une pluralité de sous-stations d'alimentation électrique (7), les sous-stations d'alimentation électrique étant connectées à un moyen d'alimentation en courant (5) d'un ou plusieurs véhicules ferroviaire (3), les sous-stations d'alimentation électrique (7) étant propres à convertir un deuxième courant électrique propre à circuler sur le moyen d'alimentation de courant (5) et ayant une tension d'utilisation en un premier courant électrique ayant une tension de transport lorsque le ou les véhicules ferroviaires (3) fonctionnent dans le mode de récupération d'énergie de freinage, les sous-stations d'alimentation électrique (7) comprennent chacune un ou plusieurs capteurs (11, 12), le ou les capteurs étant connectés à une ou plusieurs unités locales de calcul (13), les unités locales de calcul (13) ne comportent aucune interface homme machine locale pour analyser ou afficher les valeurs des capteurs, le système comprenant un réseau informatique pour la connexion entre les sous-stations et l'unité centrale, les unités locales de calcul (13) étant propre à être connectée au réseau informatique (15), l'unité centrale (19) comprenant un module de communication (30) propre à être connecté aux unités locales de calcul (13) via le réseau informatique (15), l'unité centrale (19) étant propre à :
recevoir une pluralité de données mesurées du ou des unités locales de calcul (13) des sous stations d'alimentation électrique (7), les données mesurées comprenant l'intensité d'un courant et/ou une valeur de tension fourni(e) au et/ou reçu(e) du moyen d'alimentation en courant (5) ;
stocker les données mesurées, les données mesurées stockées étant associées à un temps de captage ;
recevoir une ou plusieurs valeurs mesurées instantanées de l'intensité du courant et/ou de la tension fourni(e) au et/ou reçu(e) du moyen d'alimentation en courant (5);
**caractérisé en ce que**
l'unité centrale (19) est en outre propre à :
calculer au moins une valeur estimée du ou des valeurs mesurées instantanées, à partir des données mesurées stockées;
comparer la ou des valeurs mesurées instantanées avec la ou les valeurs estimées;
envoyer un signal de commande vers la sous-station d'alimentation électrique (7), en fonction de la comparaison de la ou des valeurs instantanées avec la ou les valeurs estimées ;
la sous-station d'alimentation électrique (7) comprenant un ou plusieurs équipements électriques, la sous-station d'alimentation électrique (7) étant propre, à la réception du signal de commande, à contrôler au moins un des équipements électriques en fonction du signal de commande, et **en ce que** si l'unité centrale (19) détecte lors d'une comparaison d'une valeur instantanée de courant et/ou de tension qu'une erreur se produit, l'unité centrale est propre à exécuter une séquence pour mettre en mode dégradé le moyen d'alimentation de courant (5).

5. Système selon l'une des revendications 5 ou 6, **caractérisé en ce que** les données mesurées comprennent une ou plusieurs valeurs de température associé à au moins un équipement électrique et/ou à une ou des salles de la sous-station d'alimentation électrique (7) et/ou des compteurs de manœuvres d'un interrupteur de connexion électrique associé au moins un équipement électrique de la sous-station d'alimentation électrique.

6. Système selon l'une des revendications 4 ou 5, **caractérisé en ce que** la sous-station d'alimentation électrique (7), est propre à mesurer des données mesurées, et/ou une ou plusieurs valeurs de température associées à au moins un équipement électrique ou à une salles de la sous-station d'alimentation électrique (7).

7. Système selon l'une des revendications 4 à 6, **caractérisé en ce que** le réseau informatique étant pour une communication des sous-stations entre elles.

## Patentansprüche

1. Verfahren zum Betreiben eines Stromnetzes eines Eisenbahnnetzes, wobei das Stromnetz wenigstens eine Zentraleinheit (19) und eine Mehrzahl von Stromversorgungsunterstationen (7) umfasst, wobei die Stromversorgungsunterstationen mit einer Stromversorgungsvorrichtung (5) eines oder mehrerer Schienenfahrzeuge (3) verbunden sind, wobei die Stromversorgungsunterstationen (7) dazu geeignet sind, einen zweiten elektrischen Strom, der über die Stromversorgungsvorrichtung (5) fließen kann und eine Betriebsspannung aufweist, in einen ersten elektrischen Strom mit einer Transportspannung umzuwandeln, wenn das oder die Schienenfahrzeuge (3) im Bremsenergie-Rückgewinnungsmodus betrieben werden, wobei die Stromversorgungsunterstationen (7) jeweils einen oder mehrere Sensoren (11, 12) umfassen, wobei der oder die Sensoren mit einer oder mehreren lokalen Recheneinheiten (13) verbunden sind, wobei die lokalen Recheneinheiten (13) keine lokale Mensch-Maschine-Schnittstelle zum Analysieren oder Anzeigen der Sensorwerte aufweisen und wobei die lokalen Recheneinheiten (13) dazu geeignet sind, mit einem Computernetzwerk (15) verbunden zu werden, wobei die Zentraleinheit (19) ein Kommunikationsmodul (30) umfasst, das dazu geeignet ist, über das Computernetzwerk (15) mit den lokalen Recheneinheiten (13) verbunden zu werden, wobei das Verfahren die folgenden Schritte umfasst:
Empfangen (100) einer Vielzahl von Messdaten durch die Zentraleinheit (19) der lokalen Recheneinheit(en) (13) der Stromversorgungsunterstationen (7), wobei die Messdaten die Stromstärke und/oder einen Spannungswert umfassen, die an die Stromversorgungsvorrichtung (5) geliefert und/oder von dieser empfangen werden; Speichern (102) der Messdaten durch die Zentraleinheit (19), wobei die gespeicherten Messdaten einer Erfassungszeit zugeordnet sind;
Empfangen (104) eines oder mehrerer momentaner Messwerte der Stromstärke und/oder der Spannung, die an die Stromversorgungsvorrichtung (5) geliefert und/oder von dieser empfangen werden, durch die Zentraleinheit (19);
**dadurch gekennzeichnet, dass** das Verfahren ferner die folgenden Schritte umfasst:
Berechnung (106) wenigstens eines geschätzten Wertes des oder der momentanen Messwerte durch die Zentraleinheit (19) anhand der gespeicherten Messdaten;
Vergleich (108) des oder der momentanen Messwerte mit dem oder den geschätzten Werten in der Zentraleinheit (19);
Senden (110) eines Steuersignals durch die Zentraleinheit (19) an die Stromversorgungsunterstation (7) in Abhängigkeit vom Vergleich des oder der momentanen Werte mit dem oder den geschätzten Werten; und
wobei die Stromversorgungsunterstation (7) beim Empfang des Steuersignals wenigstens eine elektrische Vorrichtung der Stromversorgungsunterstation (7) in Abhängigkeit vom Steuersignal steuert,
und dass, wenn die Zentraleinheit (19) bei einem Vergleich eines momentanen Strom- und/oder Spannungswertes feststellt, dass ein Fehler vorliegt, sie eine Sequenz zum Versetzen der Stromversorgungsvorrichtung (5) in einen Notbetrieb ausführt.

2. Verfahren nach einem der vorstehenden Ansprüche,
**dadurch gekennzeichnet, dass** die Messdaten einen oder mehrere Temperaturwerte umfassen, die wenigstens einem elektrischen Gerät und/oder einem oder mehreren Räumen der Stromversorgungsunterstation (7) zugeordnet sind, und/oder Schaltzähler eines elektrischen Unterbrechungsschalters, der wenigstens einem elektrischen Gerät der Stromversorgungsunterstation zugeordnet ist.

3. Verfahren nach einem der vorstehenden Ansprüche,
**dadurch gekennzeichnet, dass** das Verfahren ferner den folgenden Schritt umfasst: Messen der Messdaten und/oder eines oder mehrerer Temperaturwerte, die wenigstens einem elektrischen Gerät oder einem oder mehreren Räumen der Stromversorgungsunterstation (7) zugeordnet sind, in der Stromversorgungsunterstation (7).

4. System zum Verwalten eines Stromnetzes eines Eisenbahnnetzes, wobei das Stromnetz wenigstens eine Zentraleinheit (19) und eine Mehrzahl von Stromversorgungsunterstationen (7) umfasst, wobei die Stromversorgungsunterstationen mit einer Stromversorgungsvorrichtung (5) eines oder mehrerer Schienenfahrzeuge (3) verbunden sind, wobei die Stromversorgungsunterstationen (7) dazu geeignet sind, einen zweiten elektrischen Strom, der über die Stromversorgungsvorrichtung (5) fließen kann und eine Betriebsspannung aufweist, in einen ersten elektrischen Strom mit einer Transportspannung umzuwandeln, wenn das oder die Schienenfahrzeuge (3) im Bremsenergie-Rückgewinnungsmodus betrieben werden, wobei die Stromversorgungsunterstationen (7) jeweils einen oder mehrere Sensoren (11, 12) umfassen, wobei der oder die Sensoren mit einer oder mehreren lokalen Recheneinheiten (13) verbunden sind, wobei die lokalen Recheneinheiten (13) keine lokale Mensch-Maschine-Schnittstelle zum Analysieren oder Anzeigen der Sensorwerte aufweisen, wobei das System ein Computernetzwerk zum Verbinden der Unterstationen mit der Zentraleinheit umfasst, wobei die lokalen Recheneinheiten (13) dazu geeignet sind, an das Computernetzwerk (15) angeschlossen zu werden, wobei die Zentraleinheit (19) ein Kommunikationsmodul (30) umfasst, das über das Computernetzwerk (15) mit den lokalen Recheneinheiten (13) verbunden werden kann, wobei die Zentraleinheit (19) ferner zu Folgendem geeignet ist:
Empfangen einer Vielzahl von Messdaten von der oder den lokalen Recheneinheiten (13) der Stromversorgungsunterstationen (7), wobei die Messdaten die Stromstärke und/oder einen Spannungswert umfassen, die an die Stromversorgungsvorrichtung (5) geliefert und/oder von dieser empfangen werden;
Speichern der Messdaten, wobei die gespeicherten Messdaten einer Erfassungszeit zugeordnet sind;
Empfangen eines oder mehrerer momentaner Messwerte der Stromstärke und/oder der Spannung, die an die Stromversorgungsvorrichtung (5) geliefert und/oder von dieser empfangen werden;
**dadurch gekennzeichnet, dass**
die Zentraleinheit (19) ferner zu folgendem geeignet ist:
Berechnen wenigstens eines Schätzwertes des oder der momentanen Messwerte aus den gespeicherten Messdaten;
Vergleichen des oder der momentanen Messwerte mit dem oder den Schätzwert(en);
Senden eines Steuersignals an die Stromversorgungsunterstation (7) in Abhängigkeit vom Vergleich des oder der momentanen Werte mit dem oder den Schätzwert(en); wobei die Stromversorgungsunterstation (7) eine oder mehrere elektrische Vorrichtungen umfasst, wobei die Stromversorgungsunterstation (7) beim Empfang des Steuersignals dazu geeignet ist, wenigstens eine der elektrischen Vorrichtungen in Abhängigkeit vom Steuersignal zu steuern, und dass, wenn die Zentraleinheit (19) bei einem Vergleich eines momentanen Werts von Strom und/oder Spannung feststellt, dass ein Fehler auftritt, die Zentraleinheit dazu geeignet ist, eine Sequenz auszuführen, um die Stromversorgungsvorrichtung (5) in einen Notbetrieb zu versetzen.

5. System nach einem der Ansprüche 5 oder 6,
**dadurch gekennzeichnet, dass** die gemessenen Daten einen oder mehrere Temperaturwerte umfassen, die wenigstens einem elektrischen Gerät und/oder einem oder mehreren Räumen der Stromversorgungsunterstation (7) und/oder den Betriebszählern eines elektrischen Verbindungsschalters zugeordnet sind, der wenigstens einem elektrischen Gerät der Stromversorgungsunterstation zugeordnet ist.

6. System nach einem der Ansprüche 4 oder 5,
**dadurch gekennzeichnet, dass** die Stromversorgungsunterstation (7) dazu geeignet ist, Messdaten und/oder einen oder mehrere Temperaturwerte zu messen, die wenigstens einem elektrischen Gerät oder einem Raum der Stromversorgungsunterstation (7) zugeordnet sind.

7. System nach einem der Ansprüche 4 bis 6, **dadurch gekennzeichnet, dass** das Computernetzwerk zur Kommunikation der Unterstationen untereinander dient.

## Claims

1. -Method for managing an electrical network of a railway network, the electrical network comprising at least one central unit (19) and a plurality of electrical supply substations (7), the electrical supply substations being connected to a means (5) for supplying power to one or more railway vehicles (3), the electrical supply substations (7) being able to convert a second electrical current suitable for flowing on the power supply means (5) and having a use voltage in a first electrical current having a transport voltage when the railway vehicle(s) (3) operate in the braking energy recovery mode, the electrical supply substations (7) each comprise one or more sensors (11, 12), the sensor(s) being connected to one or more local computing units (13), the local computing units (13) do not include any local human-machine interface for analysing or displaying the values of the sensors and the local computing units (13) being capable of being connected to a computer network (15), the central unit (19) comprising a communication module (30) capable of being connected to the local computing units (13) via the computer network (15), the method comprising steps consisting in:
receiving (100), by the central unit (19), from the local computing unit(s) (13) of the electrical supply substations (7), a plurality of measured data, the measured data comprising the intensity of a current and/or a voltage value supplied to and/or received from the power supply means (5);
storing (102), by the central unit (19), measured data, the stored measured data being associated with a capture time;
receiving (104), by the central unit (19), one or more instantaneous measured values of the intensity of the current and/or of the voltage supplied to and/or received from the power supply means (5);
**characterised in that** the method furthermore comprises the steps consisting in:
calculating (106), by the central unit (19), at least one estimated value of the instantaneous measured value(s), from the stored measured data;
comparing (108), at the central unit (19), the instantaneous measured value(s) with the estimated value(s);
sending (110), by the central unit (19), a control signal to the electrical supply substation (7), as a function of the comparison of the instantaneous value(s) with the estimated value(s); and
upon receiving the control signal, the electrical supply substation (7) controls at least one item of electrical equipment of the electrical supply substation (7) as a function of the control signal, wherein if the central unit (19) detects, during a comparison of an instantaneous current and/or voltage value, that an error has occurred, it executes a sequence to put the power supply means (5) into degraded mode.

2. - Method according to any one of the preceding claims, **characterised in that** the measured data comprise one or more temperature values associated with at least one item of electrical equipment and/or with one or more rooms of the electrical supply substation (7), and/or operation counters of an electrical connection switch associated with at least one item of electrical equipment of the electrical supply substation.

3. - Method according to one of the preceding claims, **characterised in that** the method further comprises the following step:
measuring, at the electrical supply substation (7), measured data and/or one or more temperature values associated with at least one item of electrical equipment or with one or more rooms of the electrical supply substation (7).

4. - System for managing an electrical network of a railway network, the electrical network comprising at least one central unit (19) and a plurality of electrical supply substations (7), the electrical supply substations being connected to a means (5) for supplying power to one or more railway vehicles (3), the electrical supply substations (7) being able to convert a second electrical current suitable for flowing on the power supply means (5) and having a use voltage in a first electrical current having a transport voltage when the railway vehicle(s) (3) operate in the braking energy recovery mode, the electrical supply substations (7) each comprise one or more sensors (11, 12), the sensor(s) being connected to one or more local computing units (13), the local computing units (13) do not include any local man-machine interface for analysing or displaying the values of the sensors, the system comprising a computer network for the connection between the substations and the central unit, the local computing units (13) being capable of being connected to the computer network (15), the central unit (19) comprising a communication module (30) capable of being connected to the local computing units (13) via the computer network (15), the central unit (19) being capable of:
receiving a plurality of measured data from the local computing unit(s) (13) of the power supply substations (7), the measured data comprising the intensity of a current and/or a voltage value provided to and/or received from the power supply means (5);
storing the measured data, the stored measured data being associated with a capture time;
receiving one or more instantaneous measured values of the current intensity and/or the voltage supplied to and/or received from the power supply means (5);
**characterised in that**
the central unit (19) is furthermore capable of:
calculating at least one estimated value of the instantaneous measured value(s), from the stored measured data;
comparing the instantaneous measured value(s) with the estimated value(s);
sending a control signal to the power supply substation (7), according to the comparison of the instantaneous value(s) with the estimated value(s);
the electrical supply substation (7) comprising one or more items of electrical equipment, the electrical supply substation (7) being capable, upon reception of the control signal, of controlling at least one of the items of electrical equipment according to the control signal, and **in that**, if the central unit (19) detects during a comparison of an instantaneous current and/or voltage value that an error occurs, the central unit is capable of executing a sequence to put the power supply means (5) into degraded mode.

5. - System according to claim 5 or 6, **characterised in that** the measured data comprise one or more temperature values associated with at least one item of electrical equipment and/or with one or more rooms of the electrical supply substation (7) and/or operation counters of an electrical connection switch associated with at least one item of electrical equipment of the electrical supply substation.

6. - System according to claim 4 or 5, **characterised in that** the electrical supply substation (7) is capable of measuring measured data, and/or one or more temperature values associated with at least one item of electrical equipment or with a room of the electrical supply substation (7).

7. - System according to one of claims 4 to 6, **characterised in that** the computer network is for communication between the substations.
